# EUROPÄISCHE PATENTSCHRIFT

(11) **EP 0 561 282 B1**
(45) Veröffentlichungstag und Bekanntmachung des Hinweises auf die Patenterteilung: **18.12.1996**
(21) Anmeldenummer: 93103969.7
(22) Anmeldetag: 11.03.1993
(51) Int. Cl.: B60T 7/20, F16D 51/20

(54) **Bremse für rücklaufgebremste Anhänger für Strassenfahrzeuge**
Brake for road vehicle trailers braked in reverse
Frein pour remorques des véhicules routier freinés en marche arrière

(30) Priorität: 17.03.1992 DE 4208424
(43) Veröffentlichungstag der Anmeldung: 22.09.1993
(73) Patentinhaber: Schlegl, Franz, D-92521 Schwarzenfeld (DE)
(72) Erfinder: Schlegl, Franz, D-92521 Schwarzenfeld (DE)
(74) Vertreter: Graf, Helmut, Dipl.-Ing.

(56) Entgegenhaltungen:
- FR-A- 2 256 059
- FR-A- 2 636 904
- GB-A- 2 094 427

## Beschreibung

Die Erfindung bezieht sich auf eine Bremse und dabei speziell auf eine Trommelbremse für auflaufgebremste Anhänger von Straßenfahrzeugen, insbesondere für PKW-Anhänger gemäß Oberbegriff Patentanspruch 1.

Bei auflaufgebremsten Anhängern besteht das Problem, das beim Rückwärtsfahren des von dem Zugfahrzeug und dem Anhänger gebildeten Gespanns durch die auf die Anhängerdeichsel ausgeübte Druckkraft zwangsläufig die Betätigungseinrichtung der Bremse des Anhängers aktiviert wird, so daß die Räder des Anhängers blockieren, sofern nicht besondere Gegenmaßnahmen getroffen werden.

Es sind bereits Bremsen mit Rückfahrautomatik bekannt, die beim Rückwärtsfahren des Gespanns ein Bremsen bzw. Blockieren der Räder des Anhängers vermeiden, und zwar ohne daß ein manuelles Umstellen der Bremseinrichtung erforderlich ist.

Bei einer bekannten Vorrichtung, die die Merkmale des Oberbegriffs des Patentanspruches 1 aufweist (DD-A- 207 817) weist die Bremse bzw. deren Abstützeinrichtung einen an dem zweiten Ende des Primär-Backens schwenkbar vorgesehene Hilfshebel auf, über den sich dieses Ende beim Bremsen in Vorwärtsfahrt an einem an der Ankerplatte vorgesehenen Anschlag abstützt und der zugleich auch eine Abstützung für das zweite Ende des Sekundär-Bremsbackens bzw. für einen dort vorgesehenen Ansatz bildet. Durch die Geometrie des Hebels sowie durch die Kraft der diesen Hebel in seine Ausgangsstellung vorspannenden Feder muß dafür gesorgt werden, daß über den Hebel die genannte Abstützung beider Bremsbacken beim Bremsen in Vorwärtsfahrt erfolgt.

Eine ähnliche Bremse ist aus der GB-A- 20 94 427 bekannt. Beim Rückwärtsfahren wirkt der Sekundär-Bremsbacken auf den Hilfshebel ein und verschwenkt diesen derart, daß sich die Bremsbacken lösen.

Nachteilig ist bei diesen bekannten Bremsen, daß beim Bremsen in Vorwärtsfahrt die gesamte Bremskraft über die gelenkige Verbindung zwischen dem Primär-Bremsbacken und dem Hebel sowie über diesen Hebel auf die Ankerplatte übertragen wird, und daß außerdem die Geometrie des Hebels sowie auch die Kraft der den Hebel in die Ausgangsstellung vorspannenden Feder für die einwandfreie Funktion der Rückfahrautomatik sehr kritisch sind. Eine einwandfreie Arbeitsweise ist nicht in allen Fällen gewährleistet.

Bekannt ist weiterhin eine Bremse mit Rückfahrautomatik (FR-A- 22 56 059), bei der der Anschlag, über welchen beim Bremsen in Vorwärtsfahrt der Primär-Bremsbacken sich an der Ankerplatte abstützt, von einem an der Ankerplatte schwenkbar vorgesehenen Hebel gebildet ist, der dann beim Rückwärtsfahren durch den Sekundär-Bremsbacken gegen die Wirkung einer Rückstellfeder so verschwenkt wird, daß sich beide Bremsbacken lösen. Nachteilig ist hierbei ist, daß die gesamten Bremskräfte beim Vorwärtsfahren über das Gelenk des Hilfshebels übertragen werden und die Geometrie des Hebels sowie die Kraft der Rückstellfeder für die Funktionsweise der Rückfahrautomatik sehr kritisch sind.

Aufgabe der Erfindung ist es, eine Bremse für auflaufgebremste Anhänger mit einer Rückfahrautomatik aufzuzeigen, die sich bei hoher Betriebssicherheit durch eine besonders einfache und robuste Konstruktion auszeichnet.

Zur Lösung dieser Aufgabe ist eine Bremse ensprechend dem kennzeichnenden Teil des Paentanspruches 1 ausgebildet.

Bei der erfindungsgemäßen Bremse sind die Elemente der Abstützeinrichtung besonders einfache und robuste Formteile. Im wesentlichen beseht die Abstützeinrichtung lediglich aus dem Hebel und dem Distanzelement, wobei in der Ausgangsstellung des Hebels, d.h. bei dem für den normalen Fahrbetrieb (Vorwärtsfahren des Anhängers) vorgesehenen Zustand der Abstützeinrichtung sich die beiden Bremsbacken mit ihren zweiten Enden über den Hebel und das Distanzelement abstützen und dadurch beim Aktivieren der Betätigungseinrichtung der Bremse die beiden Bremsbacken in der erforderlichen Weise gegen die Bremstrommel angepreßt werden. In dieser Ausgangsstellung des Hebels liegen sich die erste und zweite Abstützfläche auf einer Linie gegenüber, die tangential oder in etwa tangential zu einem gedachten Kreisbogen um die Achse der Radachse verläuft. Die beiden Abstützflächen besitzen dann von der Achse der Radachse auch den gleichen oder annähernd den gleichen radialen Abstand.

Beim Rückwärtsfahren und bei betätigter Betätigungseinrichtung wird der Hebel aus seiner Ausgangsstellung derart verschwenkt, daß durch gleichzeitiges Verschwenken des Distanzelementes sich die beiden zweiten Enden der Bremsbacken einander annähern können und somit trotz aktivierter Betätigungseinrichtung eine Bremswirkung nicht eintritt. Das Schwenken des Hebels erfolgt hierbei bevorzugt so, daß eine der beiden Abstützflächen, vorzugsweise die erste Abstützfläche an dem Hebel einen deutlich größeren radialen Abstand von der Achse der Radachse aufweist als die andere Abstützfläche.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: teilweise im Schnitt eine als Trommelbremse ausgebildete Anhänger-Bremse gemäß der Erfindung;
- Fig. 2: in vergrößerter Darstellung den die Rückfahrautomatik bildenden Teil der Bremse;

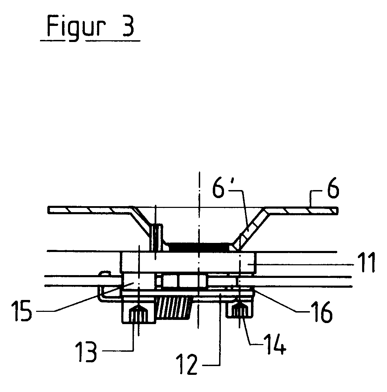

- Fig. 3: einen Schnitt entsprechend der Linie I-I der Fig. 2.

In den Figuren ist 1 eine starre Radachse eines auflaufgebremsten Anhängers, beispielsweise PKW-Anhängers. An der Radachsel ist beidseitig mittels Lageranordnungen 2 jeweils eine Bremstrommel 3 drehbar gelagert, an der u.a. in bekannter Weise ein Fahrzeugrad bzw. dessen Felge befestigt ist.

Die Bremstrommel 3 ist weiterhin in bekannter Weise napf-bzw. glockenartig mit einem Umfangsbereich 3' ausgebildet, an dessen Innenfläche beim Bremsen die beiden Bremsbacken 4 und 5 mit den zugehörigen Bremsbelägen angreifen.

An der innenliegenden, d.h. der zur Fahrzeugmitte hin gerichteten Seite ist an der Radachse 1 eine im wesentlichen kreisscheibenförmig ausgebildete Ankerplatte 6 befestigt, und zwar derart, daß diese Ankerplatte, welche die Bremstrommel 3 an der innenliegenden Seite abdeckt, mit dieser Bremstrommel nicht mitdreht. Die Ankerplatte 6 bildet das Gegenlager, welches die beim Bremsen auftretenden Gegenkräfte aufnimmt.

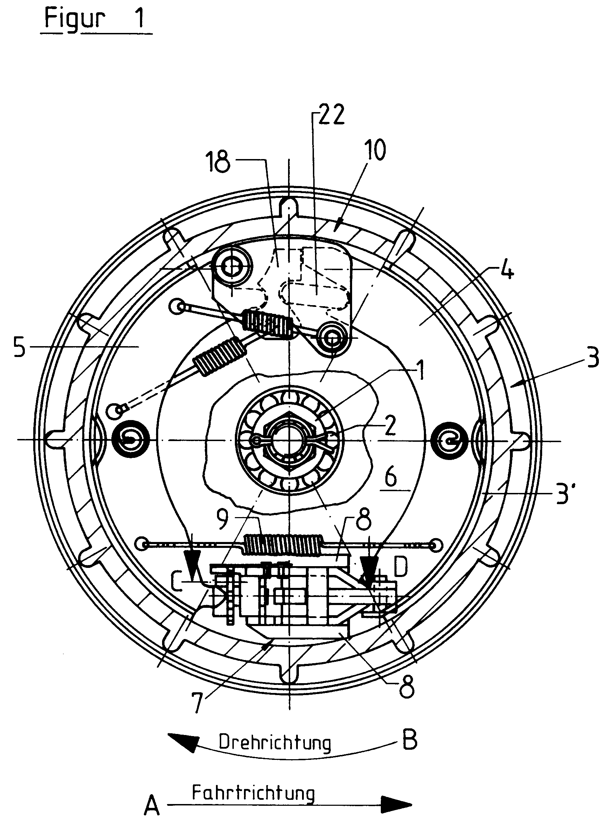

Die beiden Bremsbacken 4 und 5 sind jeweils teilringförmig ausgebildet und besitzen bei der dargestellten Ausführungsform jeweils eine Länge, die etwa einem Winkel von 130^{o} entspricht. Die Bremsbacken 4 und 5 sind an der im Innenraum der Bremstrommel 3 zugewandten Innenseite des Ankerbleches 6 angeordnet, und zwar symmetrisch zu einer gedachten vertikalen Mittelebene M, die auch die Achse der Bremstrommel 3 und der Radachse 1 einschließt. Zwischen den beiden, in der Fig. 1 untenliegenden Enden der Bremsbacken 4 und 5 ist ein Spreizschloß 7 vorgesehen, welches das eigentliche Betätigungselement der Bremse bildet und welches mit einem nicht dargestellten Bremsseil zusammenwirkt, und zwar derart, daß bei auf das Bremsseil ausgeübten Zugkräften das Spreizschloß 7 mit seinen beiden, an jeweils einen Bremsbacken 4 und 5 angreifenden Enden eine spreizende Kraft erzeugt, so daß die Bremsbacken 4 und 5 gegen die Innenfläche des Bereiches 3' der Bremstrommel 3 angedrückt werden. Das Spreizschloß 7 ist in einer an der Ankerplatte 6 ausgebildeten Führung 8 angeordnet, die eine Verschiebung des Spreizschlosses 7 um einen vorgegebenen Betrag in einer Achsrichtung erlaubt, die in etwa senkrecht zur Mittelebene M bzw. tangential zu einem gedachten Kreisbogen um die Achse der Radachse 1 verläuft. Durch eine Zugfeder 9, die mit ihren beiden Enden jeweils an einem Bremsbacken 4 und 5 des unteren, mit dem Spreizschloß 7 zusammenwirkenden Endes eingehängt ist, sind die Bremsbacken 4 und 5 in ihre nichtbremsende Stellung gegen das Spreizschloß 7 vorgespannt.

In der Fig. 1 ist mit dem Pfeil A die Fahrtrichtung des von einem Fahrzeug nachgezogenen Anhängers bei Vorwärtsfahrt dargestellt. Aus dieser Fahrtrichtung A ergibt sich dann eine Drehrichtung B für das betreffende Rad bzw. die Bremstrommel 3 relativ zu der Radachse 1 und der dort befestigten Ankerplatte 6. Bei der für die Fig. 1 gewählten Darstellung verläuft die Drehrichtung B im Uhrzeigersinn, d.h. in dieser Drehrichtung ist auf das Spreizschloß 7 folgend der Bremsbacken 5, auf diesen folgend eine die Rückfahrautomatik bildende Abstützeinrichtung 10 und auf diese folgend der Bremsbacken 4 vorgesehen, an welchen sich das Spreizschloß 7 anschließt.

Die Abstützeinrichtung 10 ist so ausgebildet, daß sie bei der Drehrichtung B beim Bremsen, d.h. bei aktiviertem Spreizschloß 7, die beiden Bremsbacken 4 und 5 an ihren oberen Enden gegeneinander abstützt, auf einem vorgegebenen Abstand hält und außerdem eine Abstützung des oberen, d.h. in bezug auf die Drehrichtung B vorderen Endes des Bremsbackens 5 bildet, so daß die vom Spreizschloß 7 auf die Bremsbacken 4 und 5 ausgeübte Spreizkraft als Bremskraft voll wirksam ist. Die Abstützeinrichtung 10 ist weiterhin so ausgebildet, daß beim Rückwärtsfahren des aus dem Anhänger und dem Zugfahrzeug bestehenden Gespanns, bei dem (Rückwärtsfahren) auf die Anhängerdeichsel eine Schubkraft ausgeübt und dadurch über das gespannte Bremsseil das Spreizschloß 7 betätigt wird, die beim Rückwärtsfahren auftretende Drehbewegung der Bremstrommel 3 (entgegen dem Pfeil B) eine Aufhebung der gegenseitigen Abstützung der oberen Enden der Bremsbacken 4 und 5 sowie auch eine Aufhebung der Abstützung des Bremsbacken 5 an der Ankerplatte 6 in der Weise bewirkt, daß trotz gespreitztem Spreizschloß 7 die Bremsbacken 4 und 5 keine Bremswirkung auf die Bremstrommel 3 ausüben, also ein Rückwärtsfahren des Anhängers möglich ist, ohne daß ein manuelles Umstellen der Auflaufbremse notwendig ist. Eine Besonderheit besteht auch darin, daß die gegenseitige Abstützung der Bremsbacken 4 und 5 an ihren oberen Enden durch die Abstützeinrichtung 10 nur solange wirksam ist, solange tatsächlich das Spreizschloß 7 betätigt ist und über die Bremstrommel 3 auf die gegen diese Bremstrommel anliegenden Bremsbacken 4 und 5 ein Drehmoment entgegen dem Pfeil B um die Achse der Radachse 1 ausgeübt wird.

Im Detail besteht die Abstützeinrichtung 10 aus zwei Platten 11 und 12, von denen die Platten 11 in geeigneter Weise an dem Ankerblech 6 bzw. an einem nach innen gezogenen Bereich 6' dieses Ankerbleches befestigt ist. Mittels zweier Schrauben 13 und 14 ist die Platte 12 an der Platte 11 befestigt. Auf den Schrauben 13 und 14 sind zwischen den beiden Platten 11 und 12 ring- oder scheibenförmige Distanzelemente 15 bzw. 16 angeordnet, und zwar das Distanzelement 15 der Schraube 13 und das Distanzelement 16 auf der Schraube 14, so daß die beiden Platten 11 und 12 auf einen vorgegebenen Abstand gehalten sind.

Das Distanzelement 15 bildet mit seiner Umfangsfläche gleichzeitig ein Abstützelement für eine kreisbogenförmig gekrümmte Abstützfläche 17, die der Bremsbacken 15 an seinem oberen, dem Spreizschloß 7 entfernt liegenden Ende aufweist. Mit der Abstützfläche 17 liegt der Bremsbacken 5 beim normalen Fahren (Pfeil A) und Bremsen des Anhängers gegen das Distanzelement 15 an und stützt sich somit an der Ankerplatte 6 ab, wodurch ein Mitdrehen des Bremsbackens 5 damit über das Spreizschloß 7 auch ein Mitdrehen des Bremsbacken 4 mit der Bremstrommel 3 nicht möglich ist.

Zwischen den beiden Platten 11 und 12 ist weiterhin ein Hebel 18 angeordnet, der mit seiner Längserstreckung in etwa radial zur Achse der Radachse 1 liegt und in seinem mittleren Bereich zwei jeweils konkav gekrümmte, d.h. bei der dargestellten Ausführungsform kreisbogenförmig konkav gekrümmte Abstützflächen 19 und 20 bildet. Diese beiden Abstützflächen 19 und 20 liegen sich in einer Achsrichtung gegenüber, die in etwa senkrecht zur Mittelebene M bzw. tangential zur einem gedachten Kreisbogen um die Achse der Radachse 1 verläuft.

Mit der Abstützfläche 19 stützt sich der Hebel 18 an seiner dem Bremsbacken 5 zugewandten Seite an einem Ansatz 21 ab, der bezogen auf die Abstützfläche 17 radial nach innen versetzt am Bremsbacken 5 ausgebildet ist und ein konvex gekrümmtes Ende aufweist, dessen Form der Abstützfläche 19 entspricht, so daß ein Schwenken des Hebels 18 um das freie Ende des Ansatzes 21 um einen vorgegebenen Betrag möglich ist.

Gegen die dem Bremsbacken 4 zugewandte Abstützfläche 20 liegt im normalen Zustand der Abstützeinrichtung 10 das eine, konvex gekrümmte Ende des stabförmig ausgebildeten Distanzelementes 22, das mit seinem anderen, ebenfalls konvex gekrümmten Ende gegen eine konvex gekrümmte Abstützfläche 24 anliegt, die am oberen Ende des Bremsbackens 4 gebildet ist.

An dem radial innenliegenden Ende des Hebels 18 greift eine Zugfeder 24 an, die mit ihrem anderen Ende am Bremsbacken 5 eingehängt ist und den Hebel 18 im Sinne eines Schwenkens um den Ansatz 21 im Uhrzeigersinn, d.h. gleichsinnig mit der Drehrichtung B vorspannt, und zwar derart, daß im normalen Zustand der Abstützeinrichtung 10 das radial außenliegende Ende des Hebels 18 mit einer dort ausgebildeten Abstützfläche 25 gegen das freie Ende eines Ansatzes 26 anliegt, der an dem oberen Ende des Bremsbacken 4 vorgesehen ist, und zwar bezogen auf die Achse der Radachse 1 in bezug auf die Abstützfläche 23 radial nach außen versetzt. Wie die Fig. 1 weiterhin zeigt, liegt das Distanzelement 22 im normalen Zustand der Abstützeinrichtung 10 mit seiner Längserstreckung in einer Achsrichtung, die im wesentlichen senkrecht zur Mittelebene M bzw. tangential zu einer gedachten Kreislinie um die Radachse verläuft, und zwar derart, daß die Abstützflächen 19 und 20 sowie 23 im wesentlichen auf dieser gedachten Kreislinie vorgesehen sind.

Der Hebel 18 sowie das Element 22 sind zwischen den beiden Platten 11 und 12 gehalten, und zwar derart, daß sich diesen beiden Elementen zwar in der nachfolgend noch näher beschriebenen Weise bewegen, aus dem Raum zwischen den beiden Platten 11 und 12 aber nicht verloren gehen können. Eine weitere Zugfeder 27 greift mit einem Ende an dem oberen Ende des Bremsbacken 5 und mit dem anderen Ende an der Schraube 14 an. Durch diese Feder 27 ist der Bremsbacken 5 derart vorgespannt, daß er mit seiner Abstützfläche 17 gegen das Distanzelement 15 anliegt.

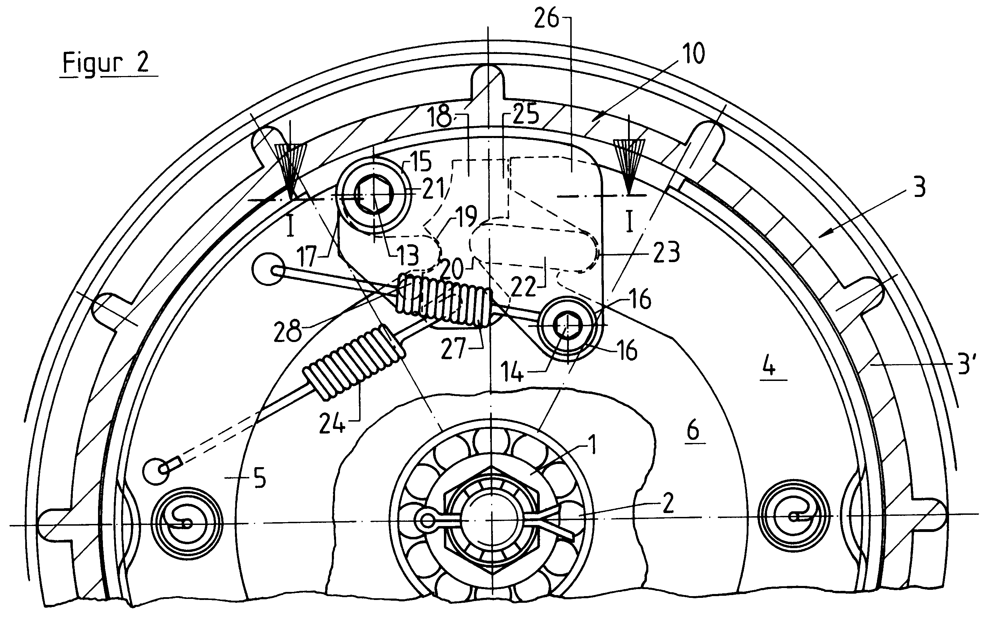

Während des normalen Fahrbetriebes, d.h. während des Vorwärtsfahrens weisen die Elemente die in den Figuren 1 bzw. 2 dargestellte Lage zueinander auf. Beim Bremsen, d.h. bei Betätigung des Spreizschlosses 7 stützen sich die Bremsbacken 4 und 5 über den Ansatz 21, den Hebel 18 und das Element 22 ab. Ein Mitdrehen der Bremsbacken 4 und 5 mit der Bremstrommel 3 ist durch die gegen das Distanzelement 15 anliegende Abstützfläche 17 nicht möglich.

Wird der Anhänger rückwärts geschoben und hierbei das Spreizschloß 7 betätigt, so wirkt der Ansatz 26 auf das radial außenliegende Ende des Hebels 18 ein, wodurch dieser Hebel gegen die Wirkung der Feder 24 im Gegenuhrzeigersinn geschwenkt wird, und zwar um den Ansatz 21. Hierdurch weicht das an der Abstützfläche 20 anliegende Ende des Elementes 22 radial nach außen aus, und zwar durch Schwenken an der Abstützfläche 23, womit die gegenseitige Abstützung der beiden Bremsbacken 4 und 5 an ihren oberen Enden entfällt und damit auch die Bremswirkung auf die Bremstrommel 3.

Das vorbeschriebene Schwenken des Hebels 18 wird dadurch unterstützt, daß der Hebel 18 mit seinem innenliegenden Ende an einer dem Bremsbacken 4 zugewandten Fläche gegen einen Spannstift 28 anliegt, der an der Platte 11 vorgesehen ist, und daß beim Rückwärtsfahren des Anhängers und bei betätigtem Spreizschloß 7 anfänglich nicht nur die beiden Bremsbacken 4 und 5, sondern auch der Hebel 18 und das Element 22 entgegen der Drehrichtung B mit der Bremstrommel 3 mitgeführt werden, so daß durch den nicht mitgeführten Spannstift 28 das Schwenken des Hebels 18 im Gegenuhrzeigersinn zumindest eingeleitet wird.

Bei der dargestellten Ausführungsform reichen die Bremsbacken 4 und 5 mit ihren oberen Enden in den zwischen den Platten 11 und 12 gebildeten Raum hinein. Hierbei dient das Distanzelement 16 als Anlage- und Führungselement, welches ein seitliches Ausweichen des oberen Endes des Bremsbacken 4 radial nach innen verhindert. Eine entsprechende Funktion hat der Spannstift 28 für das obere Ende des Bremsbacken 5.

Die Erfindung wurde voranstehend an einem Ausführungsbeispiel beschrieben. Es versteht sich, daß Änderungen sowie Abwandlungen möglich sind, ohne daß dadurch die Erfindung im Rahmen der anliegenden Patentansprüche verlassen wird.

### Aufstellung der verwendeten Bezugsziffern

- 1: Radachse
- 2: Lageranordnung
- 3: Bremstrommel
- 3': Umfangsbereich
- 4, 5: Bremsbacken
- 6: Ankerplatte
- 7: Spreizschloß
- 8: Führung
- 9: Feder
- 10: Abstützeinrichtung
- 11, 12: Platte
- 13, 14: Schraube
- 15, 16: Distanzelement
- 17: Abstützfläche
- 18: Hebel
- 19, 20: Abstützfläche
- 21: Ansatz
- 22: Distanzelement
- 23: Abstützfläche
- 24: Feder
- 25: Abstützfläche
- 26: Ansatz
- 27: Zugfeder
- 28: Spannstift

## Patentansprüche

1. Bremse eines auflaufgebremsten Anhängers für Straßenfahrzeuge, insbesondere PKW-Anhänger, mit einer an einer Radachse (1) drehbar gelagerten Bremstrommel (3), mit einer an der Radachse verdrehungssicher befestigten Ankerplatte (6), mit zwei Bremsbacken (4, 5), die an der Ankerplatte (6) um einen vorgegebenen Drehwinkel um die Achse der Radachse (1) beweglich vorgesehen sind, mit einer auf jeweils ein erstes Ende jeder Bremsbacke (4, 5) einwirkenden und im aktivierten Zustand die Bremsbacken (4, 5) spreizenden Betätigungseinrichtung (7), sowie mit einer als Rückfahrautomatik ausgebildeten Abstützeinrichtung (10) an den zweiten Enden der Bremsbacken (4, 5), wobei die Abstützeinrichtung (10) ein an der Ankerplatte (6) vorgesehenes Abstützelement (15) für das zweite Ende des Primär-Bremsbackens (5) bildet, der in einer der Vorwärtsfahrt des Anhängers entsprechenden ersten Drehrichtung (B) der Bremstrommel (3) im Bereich der Abstützeinrichtung (10) dem Sekundär-Bremsbacken (4) vorausgeht, wobei die Abstützeinrichtung (10) einen eine erste Abstützfläche (20) bildenden Hebel (18) besitzt, der an dem zweiten Ende des Primär-Bremsbacken (5) um eine Achse parallel zur Radachse drehbar gelagert ist, gegen welchen Hebel (18) ein Ansatz (26) an dem zweiten Ende des Sekundär-Bremsbackens (4) anliegt, wobei der Hebel (18) beim Rückwärtsfahren des Anhängers und bei aktivierter Betätigungseinrichtung (7) zur Freigabe der Bremsbacken (4, 5) an der Abstützeinrichtung (10) aus einer Ausgangsstellung verschwenkbar ist,
**dadurch gekennzeichnet**, daß am zweiten Ende des Sekundär-Bremsbackens (4) der ersten Abstützfläche gegenüberliegend eine zweite Abstützfläche (23) gebildet ist, und daß sich an der ersten Abstützfläche (20) am Hebel (18) und an der zweiten Abstützfläche (23) am zweiten Ende des Sekundär-Bremsbacken (4) ein zwischen dem Hebel (18) und dem zweiten Ende des Sekundär-Bremsbacken (4) angeordnetes Distanzelement (22) mit zwei Enden abstützt.

2. Bremse nach Anspruch 1, dadurch gekennzeichnet, daß die erste Abstützfläche (20) den gleichen oder in etwa den gleichen radialen Abstand von der Achse der Radachse (1) aufweist wie die gelenkige Verbindung zwischen dem Hebel (18) und dem Primär-Bremsbacken (5).

3. Bremse nach Anspruch 1 oder 2, dadurch gekennzeichnet, daß die zweite Abstützfläche (23) einen radialen Abstand von der Achse der Radachse (1) aufweist, der gleich oder in etwa gleich dem Abstand der ersten Abstützfläche (20) von dieser Achse ist.

4. Bremse nach einem der Ansprüche 1 - 3, dadurch gekennzeichnet, daß der Hebel (28) an einer der ersten Abstützfläche (20) abgewandten Seite eine dritte Abstützfläche (19) bildet, mit der der Hebel (18) schwenkbar gegen eine, vorzugsweise von einem Ansatz (21) gebildete Gegenfläche des zweiten Endes des Primär-Bremsbacken (5) anliegt.

5. Bremse nach einem der Ansprüche 1 - 4, dadurch gekennzeichnet, daß die Abstützflächen (19, 20, 23) konkav gekrümmt, vorzugsweise kreisbogenförmig konkav gekrümmt sind, und daß die mit diesen Abstützflächen (19, 20, 23) zusammenwirkenden Enden des Distanzelementes (22) oder Gegenfläche des Primär-Bremsbacken (5) konvex gekrümmt, vorzugsweise kreisbogenförmig konvex gekrümmt ausgeführt sind.

6. Bremse nach einem der Ansprüche 1 - 5, dadurch gekennzeichnet, daß das Distanzelement (22) ein langgestrecktes oder stabförmiges Element ist.

7. Bremse nach einem der Ansprüche 1 - 6, dadurch gekennzeichnet, daß das Distanzelement mit seinem gegen die erste Abstützfläche (20) anliegenden Ende beim Schwenken des Hebels (18) aus seiner Ausgangsstellung radial zur Achse der Radachse (1) verschwenkt, vorzugsweise nach außen verschwenkt wird.

8. Bremse nach einem der Ansprüche 1 - 7, dadurch gekennzeichnet, daß der Ansatz am zweiten Ende des Sekundär-Bremsbacken (4) am Hebel (18) radial versetzt zu der ersten Abstützfläche (20) angreift, und zwar bevorzugt gegenüber der ersten Abstützfläche (20) radial nach außen versetzt.

9. Bremse nach einem der Ansprüche 1 - 8, gekennzeichnet durch eine den Hebel (18) in seine Ausgangsstellung vospannende Feder (24).

10. Bremse nach einem der Ansprüche 1 - 9, gekennzeichnet durch einen beispielsweise von einem Spannstift (28) gebildeten und an der Ankerplatte (8) vorgesehenen Anschlag, gegen den der Hebel (18) in der Ausgangsstellung anliegt.

## Claims

1. Brake for an overrun-braked¹ trailer for road vehicles, in particular a car trailer, with a brake drum (3) rotatably mounted on a wheel axle (1), with an anchor plate (6) fastened to the wheel axle in a torsion-proof manner, with two brake shoes (4, 5) which are provided on the anchor plate (6) so as to be movable, by a predetermined angle of rotation, about the axis of the wheel axle (1), with an actuating arrangement (7) which acts on a first end, in each case, of each brake shoe (4, 5) and, in the activated condition, spreads the brake shoes (4, 5) apart, and also with a supporting arrangement (10), which is constructed as an automatic reversing system, on the second ends of the brake shoes (4, 5), while the supporting arrangement (10) forms a supporting element (15), which is provided on the anchor plate (6), for the second end of the primary brake shoe (5) which precedes the secondary brake shoe (4), in the region of the supporting arrangement (10), in a first rotational direction (B) of the brake drum (3) that corresponds to the forward travel of the trailer, while the supporting arrangement (10) possesses a lever (18) which forms a first supporting face (20) and is mounted, at the second end of the primary brake shoe (5), so as to be rotatable about an axis parallel to the wheel axle, and against which (lever (18)) an extension (26) on the second end of the secondary brake shoe (4) abuts, while the lever (18) can be tilted on the supporting arrangement (10) out of a starting position, when the trailer travels backwards and when the actuating arrangement (7) is activated, for the purpose of releasing the brake shoes (4, 5),
characterised in that a second supporting face (23) is formed, opposite the first supporting face, at the second end of the secondary brake shoe (4), and that a distance element (22) disposed between the lever (18) and the second end of the secondary brake shoe (4) is supported, by two ends, on the first supporting face (20) on the lever (18) and on the second supporting face (23) on the second end of the secondary brake shoe (4).

2. Brake according to claim 1, characterised in that the first supporting face (20) has the same, or approximately the same, radial distance from the axis of the wheel axle (1) as the articulating connection between the lever (18) and the primary brake shoe (5).

3. Brake according to claim 1 or 2, characterised in that the second supporting face (23) has a radial distance from the axis of the wheel axle (1) which is equal, or approximately equal, to the distance of the first supporting face (20) from the said axis.

4. Brake according to one of claims 1 to 3, characterised in that the lever (28) forms, on a side which faces away from the first supporting face (20), a third supporting face (19) by which the lever (18) abuts in a pivoting manner against a counterface, which is preferably formed by an extension (21), on the second end of the primary brake shoe (5).

5. Brake according to one of claims 1 to 4, characterised in that the supporting faces (19, 20, 23) are concavely curved, preferably concavely curved in the shape of a circular arc, and that the ends, which interact with the said supporting faces (19, 20, 23), of the distance element (22) or the counterface of the primary brake shoe (5) are designed so as to be convexly curved, preferably convexly curved in the shape of a circular arc.

6. Brake according to one of claims 1 to 5, characterised in that the distance element (22) is an elongated or bar-shaped element.

7. Brake according to one of claims 1 to 6, characterised in that, when the lever (18) is pivoted radially to the axis of the wheel axle (1), out of its starting position, the distance element is tilted, and preferably pivoted forwards and outwards, by its end that abuts against the first supporting face (20).

8. Brake according to one of claims 1 to 7, characterised in that the extension at the second end of the secondary brake shoe (4) acts upon the lever (18) in a manner which is offset radially to the first supporting face (20), in fact is preferably offset radially outwards in relation to the first supporting face (20).

9. Brake according to one of claims 1 to 8, characterised by a spring (24) that pre-tensions the lever (18) into its starting position.

10. Brake according to one of claims 1 to 9, characterised by a stop, which is formed, for example, by a clamping pin (28) and provided on the anchor plate (8) and against which the lever (18) abuts in the starting position.

## Revendications

1. Frein d'une remorque freiné par a frein à inertie pour véhicules routiers, plus spécifiquement pour remorques de voitures, pourvu d'un tambour de frein (3) pivotant autour d'un essieu (1), pourvu d'une plaque d'ancrage (6) fixée à l'essieu sans possibilité de pivoter, pourvu de deux mâchoires (4,5) conçues de manière à pouvoir se déplacer sur la plaque d'ancrage (6) selon a angle prédéfini autour de l'axe de l'essieu (1), muni d'un système de commande (7) agissant sur la première extrémité de chaque mâchoire (4,5) et écartant les mâchoires lorsqu'en activité ainsi que d'un dispositif d'appui (10) conçu tel une commande automatique de marche arrière, pour l'extrémité seconde des mâchoires (4,5), le dispositif d'appui (10) formant à la plaque d'ancrage (6) un élément d'appui (15) pour la seconde extrémité de la mâchoire primaire (5), qui dans un premier sens de rotation (B) du tambour de frein (3) lors de la marche en avant de la remorque précède la mâchoire secondaire (4) au niveau du dispositif d'appui (10), ledit dispositif (10) comportant un levier (18) constituant une première face d'appui (20) et qui est disposée à la seconde extrémité de la mâchoire primaire (5) de manière à pouvoir pivoter autour d'un axe parallèlement à l'essieu, levier (18) auquel s'appuie une saillie (26) solidaire de la seconde extrémité de la mâchoire secondaire (4), le levier (18) étant capable de quitter une position de repos lors de la marche arrière de la remorque et lorsque le système de commande (7) est activé afin de débloquer les mâchoires (4,5) au niveau du dispositif d'appui (10), caractérisé en ce qu'à la seconde extrémité de la mâchoire secondaire (4) la première face d'appui est opposée à une seconde face d'appui (23) et en ce qu'à la première face d'appui (20) au levier (18) et à la seconde face d'appui (23) à la seconde extrémité de la mâchoire secondaire (4) s'appuie un élément d'écartement (22) à deux bouts entre le levier (18) et la seconde extrémité de la mâchoire secondaire (4).

2. Frein selon la revendication 1, caractérisé en ce que la première face d'appui (20) présente la même ou quasi la même distance radiale par rapport à l'axe de l'essieu (1) que la connexion articulée entre le levier (18) et la mâchoire primaire (5).

3. Frein selon la revendication 1 ou 2, caractérisé en ce que la seconde face d'appui (23) se situe par rapport à l'axe de l'essieu (1) à une distance radiale égale ou quasi égale à celle qui sépare la première face d'appui (20) de cet axe.

4. Frein selon l'une ou l'autre des revendications 1 à 3, caractérisé en ce que le levier (18) forme, à un côté opposé à la première face d'appui (20), une troisième face d'appui (19) par rapport à laquelle le levier (18) est capable de pivoter contre une contre-surface de la seconde extrémité de la mâchoire primaire (5) constituée de préférence par une saillie (21).

5. Frein selon l'une ou l'autre des revendications 1 à 4, caractérisé en ce que les faces d'appui (20,23) sont recourbées de manière concave, ce de préférence en forme d'arc de cercle, et en ce que les extrémités de l'élément d'écartement (22) agissant conjointement avec ces faces d'appui (20,23) ou la contre-surface de la mâchoire primaire (5) sont courbées de manière convexe, ce de préférence en forme d'arc de cercle.

6. Frein selon l'une ou l'autre des revendications 1 à 5, caractérisé en ce que l'élément d'écartement (22) est un élément très allongé ou en forme de barre.

7. Frein selon l'une ou l'autre des revendications 1 à 6, caractérisé en ce que l'élément d'écartement, lors du déplacement du levier (18), pivote avec son extrémité située contre la première face d'appui (20) hors de sa position de repos radialement par rapport à l'axe de l'essieu (1), ce de préférence vers l'extérieur.

8. Frein selon l'une ou l'autre des revendications 1 à 7, caractérisé en ce que la saillie sur la seconde extrémité de la mâchoire secondaire (4) agit sur le levier (18) de façon déplacée radialement par rapport à la première face d'appui (20), ce de préférence en étant déplacée radialement vers l'extérieur par rapport à la première face d'appui (20).

9. Frein selon l'une ou l'autre des revendications 1 à 8, caractérisé par un ressort (24) précontraignant le levier (18) dans sa position de repos.

10. Frein selon l'une ou l'autre des revendications 1 à 9, caractérisé par une butée constituée par exemple par une cheville (28) et fixée à la plaque d'ancrage (8), contre laquelle vient s'appuyer le levier (18) en position de repos.
